# EUROPÄISCHE PATENTSCHRIFT

(11) **EP 2 217 473 B1**
(45) Veröffentlichungstag und Bekanntmachung des Hinweises auf die Patenterteilung: **13.04.2016**
(21) Anmeldenummer: 08851943.4
(22) Anmeldetag: 02.10.2008
(51) Int. Cl.: B60S 1/40, B60S 1/38

(54) **WISCHBLATT UND WISCHARM**
WIPER BLADE AND WIPER ARM
BALAI D'ESSUIE-GLACE ET BRAS D'ESSUIE-GLACE

(30) Priorität: 22.11.2007 DE 102007056320; 01.10.2008 DE 102008042516
(43) Veröffentlichungstag der Anmeldung: 18.08.2010
(73) Patentinhaber: Robert Bosch GmbH, 70442 Stuttgart (DE)
(72) Erfinder: WOLFGARTEN, Sven, 77815 Bühl (DE); BEELEN, Hans, 3540 Herk de Stad (BE); WINDMOLDERS, Eric, 3510 Kermt (BE); VANGEEL, Tom, 3000 Leuven (BE); SCHOLL, Artur, 76571 Gaggenau (DE)
(86) Internationale Anmeldenummer: PCT/EP2008/063196
(87) Internationale Veröffentlichungsnummer: WO 2009/065661

(56) Entgegenhaltungen:
- WO-A-2007/071508
- DE-A1- 10 305 322
- DE-A1-102005 019 389

## Beschreibung

### Stand der Technik

Die Erfindung geht von einem Wischblatt nach dem Oberbegriff des Anspruchs 1 aus.

Aus der DE 10 2005 019 389 A1 ist ein Wischblatt bekannt, das über ein so genanntes "Sidelock-System" mit einem Wischarm gelenkig verbunden ist. Hierzu dient ein Anschlusselement, das im mittleren Bereich des Wischblatts an Federschienen befestigt ist, die als Tragelement dienen und seitlich aus Längsnuten einer Wischerleiste vorstehen. Eine Abdeckkappe aus Kunststoff überdeckt das in der Regel aus Blech gefertigte Anschlusselement. Ein mit dem freien Ende des Wischarms, z.B. einer Wischstange des Wischarms verbundenes Verbindungselement besitzt eine Gelenkachse, die seitlich und quer zur Längsrichtung des Wischarms und zu dem Wischblatt zeigend in das Verbindungselement eingesetzt und vorzugsweise verschweißt oder vernietet ist. Die Gelenkachse wird in einer Nabe des Anschlusselements schwenkbar gelagert. Das Verbindungselement kann gieß- oder spritztechnisch mit der Gelenkachse und einem Sicherungselement in Form eines Bügels separat in einem Stück oder als Blechbiegeteil gefertigt sein und auf das Ende der im Querschnitt rechteckigen Wischstange des Wischarms geschoben und dort befestigt werden.

Parallel zur Gelenkachse ist am Verbindungselement in Längsrichtung zum Antriebsende hin versetzt der Bügel angeordnet, dessen freies Ende zur Seite des Wischblatts hin abgewinkelt ist. In montierter Position überdeckt der Bügel die Abdeckkappe teilweise, wobei das abgewinkelte Ende des Bügels in eine Vertiefung oder Öffnung in der Deckwand der Abdeckkappe eintaucht. Damit die obere Seite des Bügels etwa bündig mit der Deckwand abschließt, besitzt diese im Bereich des Bügels eine entsprechende Vertiefung. Durch das abgewinkelte Ende wird das Wischblatt in montierter Position auf der Gelenkachse axial gesichert.

In einer Ausführungsform ist das Verbindungselement des Wischarms ein Blechbiegeteil mit einem im Wesentlichen u-förmigen Querschnittprofil, in das die Gelenkachse eingenietet ist. Die zum freien Ende der Gelenkachse weisende Innenwand des Verbindungselements ist zum antriebsseitigen Ende im Bereich der Brücke unterbrochen, da aus dem Material der Innenwand die Brücke geformt ist. Entsprechend ergibt sich an der der Wischleiste zugewandten unteren Kante des Verbindungselements eine Ecke.

Aus der DE 103 05 322 A1 ist ein Wischblatt in Flachbauweise bekannt, bei dem ein Anschlusselement in Form einer Blechkralle auf Federschienen befestigt ist, die als Tragelement dienen und in Längsnuten einer Wischleiste angeordnet sind. Auf den seitlich aus den Längsnuten vorstehenden Teilen der Federschienen sind Spoilerteile montiert. Auf dem Anschlusselement sitzt ein Adapterelement, das einen Führungsblock aufweist, der auf der Anströmseite des Spoilerprofils angeordnet ist. An der zum äußeren Ende des Wischblatts weisenden Stirnseite besitzt der Führungsblock eine quer zum Wischblatt verlaufende Lagerachse für eine offene Nabe eines am Wischarm befestigten Verbindungselements. Die Gelenkachse wird in der offenen Nabe durch eine Lasche gehalten, die in Längsrichtung zum antriebsseitigen Ende des Wischarms hin versetzt im montierten Zustand an einer Lagerfläche des Führungsblocks anliegt. Damit die Lasche nicht unbeabsichtigt den Kontakt zur Lagerfläche verliert, ist die Schwenkbewegung des Wischblatts relativ zum Wischarm begrenzt, indem in der Lasche ein Langloch in Richtung der Schwenkbewegung vorgesehen ist, in das ein federnder Rasthaken, der am Führungsblock angeformt ist, mit seiner Rastnase eingreift. Die Länge des Langlochs bestimmt die Größe der zugelassenen Schwenkbewegung.

Mit der WO-A-2007/071508 ist ein gattungsgemässes Wischblatt bekannt, das in Sidelock-Technik an den Wischarm angeschlossen werden kann und Identifikationsmittel aufweist, die ein richtige Zuordnung von Wischblatt und Wischarm ermöglichen.

Aufgabe der Erfindung ist es, die Schwenkbewegung des Wischblatts relativ zum Wischarm zu begrenzen.

### Offenbarung der Erfindung

Nach der Erfindung sind an einem mit dem Anschlusselement drehfest verbundenen Bauteil federnd nachgiebige Mittel vorgesehen, die mit starren Mitteln am Wischarm verrasten können und im verrasteten Zustand die Schwenkbewegung des Wischblatts relativ zum Wischarm begrenzen. Bei der Montage des Wischarms nimmt das Wischblatt zunächst eine senkrechte Stellung zum Wisch-arm ein und wird dann durch die Schwenkbewegung in die Betriebsstellung gebracht. Hierbei greift ein abgewinkeltes Ende der Brücke ganz oder teilweise über die Abdeckkappe und verhindert somit, dass sich das Wischblatt im Betrieb in Richtung der Gelenkachse von dieser löst. Damit sich das Wischblatt nach der Montage nicht unbeabsichtigt zurückdrehen kann, wobei das abgewinkelte Ende außer Eingriff geraten könnte, werden das Wischblatt und der Wischarm durch die nachgiebigen und starren Mittel gegenseitig verrastet. Dadurch wird die Schwenkbewegung auf ein Maß begrenzt, das in jedem Fall für die Anpassung des Wischblatts an eine Krümmung einer Fahrzeugscheibe ausreicht.

Gemäß einer Ausgestaltung der Erfindung wird vorgeschlagen, dass die Federkraft der federnd nachgiebigen Mittel so stark ist, dass diese beim Verrasten ein deutlich wahrnehmbares Geräusch erzeugen. Dieses gibt dem Monteur einen Hinweis darauf, dass das Wischblatt die Betriebsposition erreicht hat und die Montage einwandfrei abgeschlossen ist.

Die nachgiebigen Mittel können an verschiedenen Stellen im Bereich des Anschlusselements positioniert werden. Bei einer Ausgestaltung ist an dem Anschlusselement ein Adapterelement befestigt. Es weist im Bereich seiner dem Wischarm zugewandten Stirnseite eine Federtaste auf, die an einer Seite, die einer Vertiefung der Abdeckkappe für die Brücke des Wischarms zugewandt ist, eine Rastnase aufweist. Diese kann an der Brücke verrasten, die hierzu zweckmäßigerweise eine zur Wischleiste hin abgewinkelte Lasche mit einem Langloch besitzt. Dabei können die Brücke und die Lasche unmittelbar an das Ende des Wischarms angeformt sein oder Bestandteil eines separat gefertigten Verbindungselements sein, das mit dem Ende des Wischarms fest zu einer Baueinheit verbunden ist. Die Abdeckkappe besitzt zweckmäßigerweise in ihrer dem Wischarm zugewandten Stirnwand eine Öffnung, durch die im montierten Zustand die Taste zur Demontage des Wischblatts betätigt werden kann.

Eine andere Lösung ergibt sich, wenn das Adapterelement auf seiner dem Wischarm abgewandten Längsseite nahe der Vertiefung der Abdeckkappe eine Federzunge mit einem nach außen abgewinkelten Ende besitzt. Dieses kann zweckmäßigerweise mit einem Wischarm zusammenwirken, bei dem das abgewinkelte Ende der Brücke an seiner inneren Seite einen Nocken aufweist. Bei der Schwenkbewegung des Wischblatts überstreicht der Nocken das abgewinkelte Ende der Federzunge und erzeugt beim Verrasten ein akustisches Signal.

Bei einer weiteren Ausgestaltung der Erfindung besitzt das abgewinkelte Ende der Brücke an seiner zum Antriebsende weisenden Seite eine Ecke, die zweckmäßigerweise als Nocken ausgestaltet ist. Die Ecke bzw. der Nocken wirkt mit einer Federzunge an einer quer verlaufenden Kante des Adapterelements bzw. der Adapterkappe zusammen. Bei der Montage wird die Ecke bzw. der Nocken hinter die Federzunge geschwenkt, wobei ein hörbares Geräusch entsteht. Beim Zurückdrehen des Wischblatts begrenzt die Ecke bzw. der Nocken die Schwenkbewegung, bis die Federzunge mit einem überhöhten Kraftaufwand überdrückt werden kann.

Gemäß einer weiteren Ausgestaltung der Erfindung besitzt die Abdeckkappe an ihrer dem Verbindungselement des Wischarms zugewandten äußeren Seite einer Seitenwand eine in Längsrichtung des Wischblatts nachgiebige Federzunge mit einem zum äußeren Ende des Wischblatts abgewinkelten Ende. Diese wirkt mit einer Ecke einer Innenwand des Wischarms zusammen, die bei der Schwenkbewegung die Federzunge zurückdrückt, sodass die Federzunge nach dem Passieren der Ecke in ihre Ausgangslage zurückschnellt und dabei ein Geräuschsignal erzeugt. Das abgewinkelte Ende der Federzunge begrenzt den Schwenkbereich beim Zurückdrehen des Wischblatts. Zur Demontage ist ein erhöhter Kraftaufwand erforderlich, um den Widerstand der Federzunge zu überwinden.

In Montagerichtung wird der Schwenkbereich zweckmäßigerweise durch einen festen Anschlag begrenzt, der im Abstand zur Federzunge an der Abdeckkappe vorgesehen ist. Schließlich kann es nach einer weiteren Ausgestaltung der Erfindung vorteilhaft sein, dass das Verbindungselement des Wischarms ein Schnappelement aufweist, das zwischen einer Innenwand und einer Außenwand angeordnet ist und ein erstes Federelement und ein zweites Federelement besitzt. Das erste Federelement ist in seiner Ausgangsposition ein Stück weit zum freien Ende der Gelenkachse vor der Innenwand angeordnet, und das zweite Federelement liegt mit einem Vorsprung an der der Innenwand zugewandten Innenseite des ersten Federelements an, sodass der Vorsprung des zweiten Federelements während der Montage des Wischblatts hinter die Innenwand gedrückt wird und an dieser anliegt. Dabei erzeugt der Vorsprung ein Geräuschsignal, wodurch der Monteur feststellen kann, dass das Wischblatt weit genug auf die Gelenkachse geschoben ist, um die abschließende Schwenkbewegung ausführen zu können.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Wischblatt mit einem Wischarm in einer Explosionsdarstellung,
- Fig. 2 und Fig. 3: Varianten zur Fig. 1,
- Fig. 4: eine perspektivische Ansicht eines Wischblatts nach Fig. 3 von unten,
- Fig. 5: eine perspektivische Darstellung eines Wischarms für ein Wischblatt nach Fig. 1 bis 4 vor der Montage von unten,
- Fig. 6: einen Wischarm nach Fig. 5 in Montageposition und
- Fig. 7: eine Variante zur Figur 2.

### Ausführungsformen der Erfindung

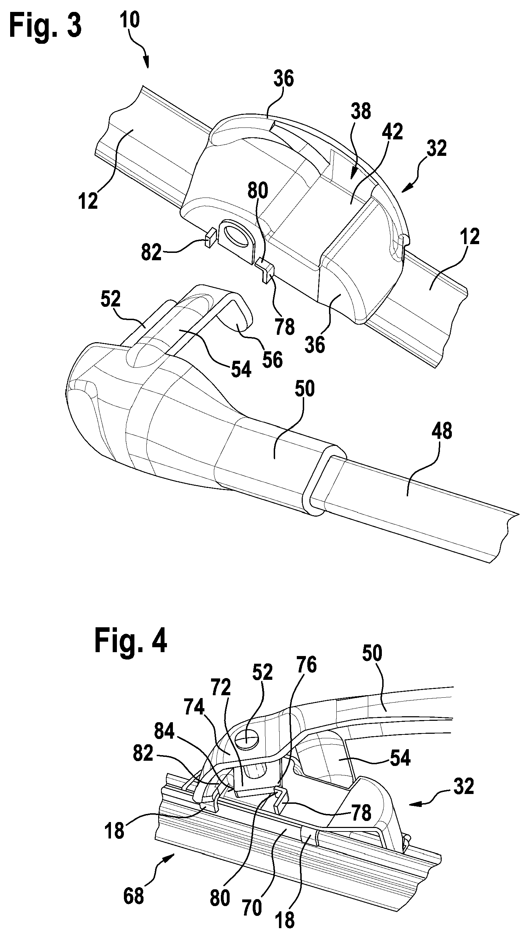

Ein Wischblatt 10 mit einem Spoiler 12, einem Anschlusselement 14, einem Adapterelement 24 und einer Abdeckkappe 32 sowie einer Wischleiste 68 (Fig. 4) kann an einem Wischarm 48 schwenkbar gelagert werden. Hierzu besitzt der Wischarm 48 ein Verbindungselement 50, das an seinem Ende mit ihm zu einer Baueinheit fest verbunden ist. Das Verbindungselement 50 kann auch einstückig an dem Wischarm 48 angeformt sein.

Das Verbindungselement 50 besitzt eine Gelenkachse 52, die seitlich zum Wischblatt 10 weisend und quer zu diesem angeordnet ist. Die Gelenkachse 52 wird in einer Nabe 20 des Anschlusselements 14 schwenkbar gelagert. Parallel zur Gelenkachse 52 ist zum Antriebsende des Wischarms 48 hin versetzt eine Brücke 54 am Verbindungselement 50 angeformt.

Das Anschlusselement 14, das im mittleren Bereich des Wischblatts 10 mittels Krallen 18 in einer Lücke des Spoilers 12 an Federschienen 70 befestigt ist, besitzt einen Boden 16. An diesem sind die Krallen 18 angeformt, wobei zwischen den Krallen 18 Seitenwangen 22 vom Boden 16 etwa senkrecht abgewinkelt sind. Diese tragen die Nabe 20.

Das Adapterelement 24 wird auf das Anschlusselement 14 aufgeklippst und besitzt an seinen Stirnseiten Anschlussprofile 30 für den Spoiler 12. An der antriebsseitigen Stirnseite 26 des Adapterelements 24 befindet sich eine Federtaste 28, die in Längsrichtung des Wischblatts 10 federnd nachgiebig ist, und an der Seite, die zum äußeren Ende des Wischblatts 10 weist, eine Rastnase 29 besitzt.

Das Anschlusselement 14 und das Adapterelement 24 werden von der Abdeckkappe 32 überdeckt. Diese besitzt Seitenwände 36, die durch eine Deckwand 34 und eine Stirnwand 44 miteinander verbunden sind. Die Abdeckkappe 32 wird auf das Anschlusselement 14 bzw. auf das Adapterelement 24 geklippst, wobei eine Lageröffnung 40 in der zum Wischarm 48 weisenden Seitenwand 36 zur Nabe 20 des Anschlusselements 14 fluchtet, sodass die Gelenkachse 52 seitlich in die Nabe 20 gesteckt werden kann.

Die Deckwand 34 der Abdeckkappe 32 besitzt in einem entsprechenden Abstand zur Nabe 20 eine Vertiefung 42 für die Brücke 54 des Verbindungselements 50, die von der dem Wischarm 48 zugewandten Seitenwand 36 bis kurz vor die gegenüberliegende Seitenwand 36 reicht. Am äußeren Ende der Vertiefung 42 befindet sich eine Öffnung 38, in die bei der Montage das abgewinkelte Ende 56 der Brücke 54 einschwenkt. Die sich an die Vertiefung 42 anschließende gewölbte Stirnwand 44 besitzt eine Öffnung 46, durch die die Taste 28 des Adapterelements betätigt werden kann. Außerdem schließt sich an die Öffnung 46 eine Aussparung 47 für eine Lasche 58 an, die an der Brücke 54 angeformt und zum Wischblatt 10 hin abgewinkelt ist, sodass im montierten Zustand die Lasche 58 mit ihrem Langloch 60 durch die Aussparung 47 in dem Bereich der Rastnase 29 der Taste 28 gelangt. Im montierten Zustand greift die Rastnase 29 in das Langloch 60 ein. Beim Einrasten wird ein akustisches Signal erzeugt, das die ordnungsgemäße Montage signalisiert. Der zulässige Schwenkbereich zwischen dem Wischblatt 10 und dem Wischarm 48 wird durch den Bewegungsspielraum der Rastnase 29 innerhalb des Langlochs 60 begrenzt.

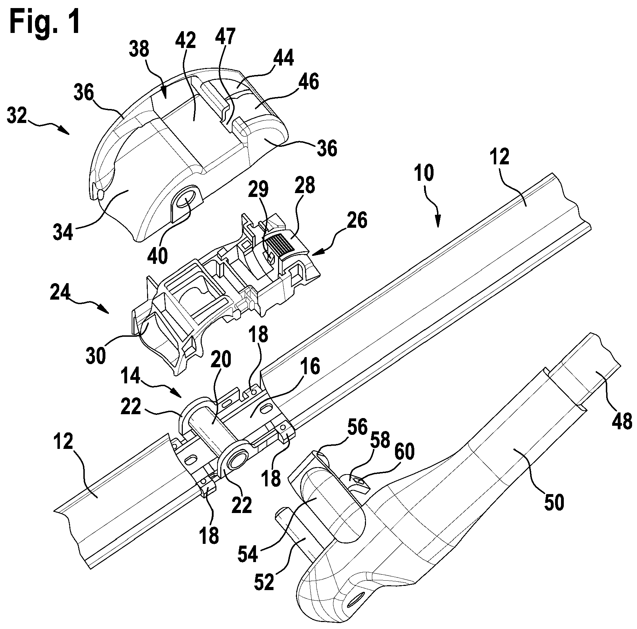

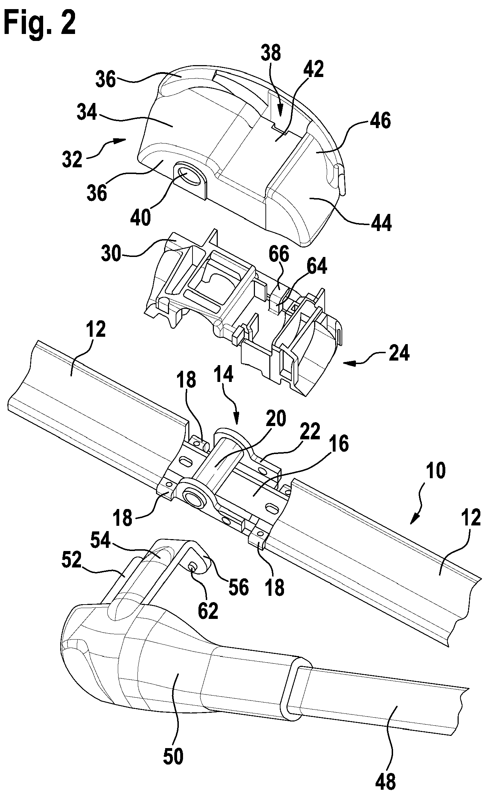

Die Ausführung nach Fig. 2 unterscheidet sich von der Ausführung nach Fig. 1 im Wesentlichen dadurch, dass die Brücke 54 anstelle der Lasche 58 an der Innenseite ihres abgewinkelten Endes 56 einen Nocken 62 besitzt, der mit einer Federzunge 64 auf der dem Wischarm 48 abgewandten Seite des Adapterelements 24 zusammenwirkt. Die Federzunge 64 besitzt ein nach außen abgewinkeltes Ende 66, das bei der Schwenkbewegung des Wischblatts 10 hinter den Nocken 62 einrastet und dabei ein Geräuschsignal erzeugt. Die Federtaste 28 mit ihrer Rastnase 29 entfällt bei dieser Ausführung.

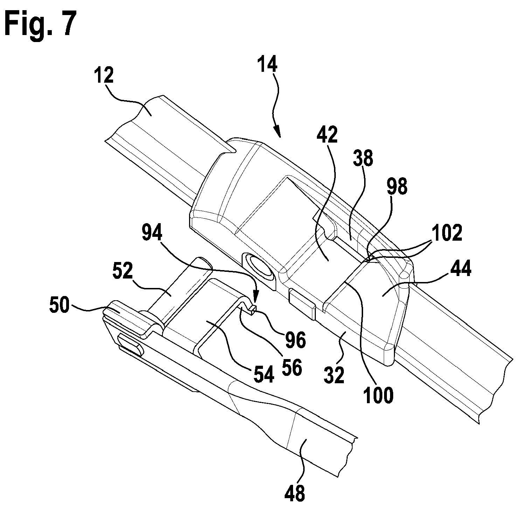

Die Ausführung nach Fig. 7 besitzt eine Abdeckkappe 32, die im Schwenkbereich des abgewinkelten Endes 56 der Brücke 54 eine Federzunge 98 besitzt, die zweckmäßigerweise durch Einschnitte 102 in einer quer verlaufenden Kante 100 gebildet ist. Die Federzunge 98 wirkt mit einer Ecke 94 des abgewinkelten Endes 56 zusammen, wobei die Ecke 94 zum Antrieb des Wischarms 48 gerichtet ist und in vorteilhafter Weise als Rastnocken 96 ausgebildet sein kann. Bei der Montage schwenkt der Rastnocken 96 unter einem deutlich wahrnehmbaren Geräusch hinter die Federzunge 98 und begrenzt beim Rückwärtsschwenken den Schwenkbereich des Wischblatts 10 relativ zum Wischarm 48. Dieser Schwenkbereich ist deutlich größer, als er für einen ordnungsgemäßen Betrieb des Wischblatts 10 auf einer gekrümmten Fahrzeugscheibe erforderlich ist.

Bei der Ausführung nach Fig. 3 und Fig. 4 hat das Verbindungselement 50 an seinem zum äußeren Ende des Wischblatts 10 weisenden Ende ein im Wesentlichen u-förmiges Querschnittprofil, in das die Gelenkachse 52 eingesetzt ist. Das Querschnittprofil besitzt eine Außenwand 74 und eine Innenwand 72, die zur Brücke 54 hin unterbrochen ist, und an ihrer unteren Kante eine Ecke 76 bildet. Diese wirkt mit einer Federzunge 78 zusammen, deren nachgiebiges Ende 80 zum äußeren Ende des Wischblatts 10 abgewinkelt ist. Wird das Wischblatt 10 bei der Montage in seine Betriebsstellung gedreht, wird die Federzunge 78 durch die Ecke 76 zurückgedrückt und schnellt danach wieder in ihre Ausgangslage zurück, wobei sie den Schwenkbereich des Wischblatts 10 in entgegengesetzter Richtung blockiert. In Montagedrehrichtung wird der Schwenkbereich durch einen Anschlag 82 begrenzt, der mit einer Anschlagfläche 84 an der Innenwand 72 zusammenwirkt. Zur Demontage des Wischblatts 10 wird die Federzunge 78 mit einer erhöhten Kraft überdrückt, sodass das abgewinkelte Ende 56 der Brücke 54 aus der Öffnung 38 der Abdeckkappe 32 herausgedreht werden kann.

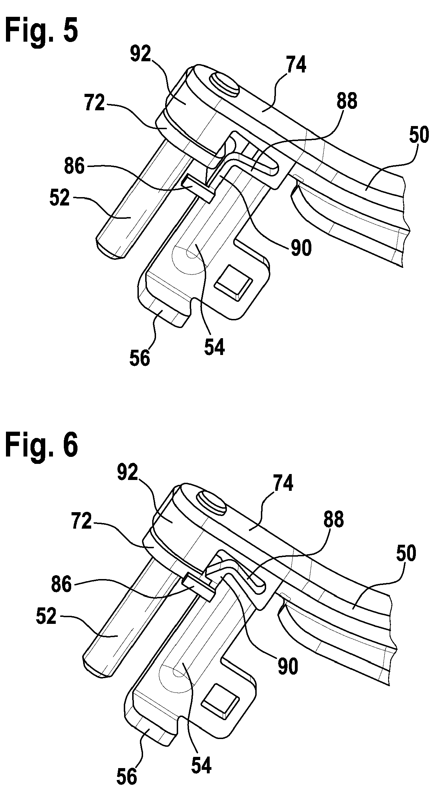

Der Wischarm 48 bzw. sein Verbindungselement 50 nach Fig. 5 und Fig. 6 weist zwischen der Innenwand 72 und der Außenwand 74 an seinem Ende im Bereich der Gelenkachse 52 ein Schnappelement 92 auf, das als Signalgeber dient, wenn die Gelenkachse 52 in der Nabe 20 des Anschlusselements 14 die Endposition erreicht hat, sodass das abgewinkelte Ende 56 in die Öffnung 38 der Abdeckkappe 32 eingeschwenkt werden kann. Hierzu besitzt das Schnappelement 92 ein erstes Federelement 86, das in seiner Ausgangsposition (Fig. 5) ein Stück weit zum freien Ende der Gelenkachse 52 angeordnet ist, während ein Vorsprung 90 eines zweiten Federelements 88 an der zur Innenwand 72 weisenden Seite des ersten Federelements 86 anliegt. Bei der Montage des Wischblatts 10 wird das erste Federelement 86 so weit zu Innenwand 72 gedrückt, dass der Vorsprung 90 des zweiten Federelements 88 hinter die Innenwand 72 gerät und dort verrastet, wobei es ein Geräuschsignal erzeugt. Der Monteur erkennt daran, dass die ordnungsgemäße Montageposition erreicht ist. Hierzu ist es zweckmäßig, dass das Verbindungselement 50 ein Blechbiegeteil ist, während das Schnappelement aus Kunststoff gefertigt werden kann.

## Patentansprüche

1. Wischblatt (10) in Flachbalkenbauweise mit einer Wischleiste (68) und mindestens einer Federschiene (70) als Tragelement, wobei im mittleren Bereich des Wischblatts (10) auf der Federschiene (70) ein Anschlusselement (14) befestigt ist, mit dem eine Abdeckkappe (32) fest, aber lösbar verbunden ist, die so gestaltet sind, dass ein seitlich zum Anschlusselement (14) verlaufender Wischarm (48) mit einer quer zur Längsrichtung des Wischblatts (10) verlaufenden Gelenkachse (52) und mit einer dazu parallelen Brücke (54) mit dem Wischblatt (10) um die Gelenkachse (52) schwenkbar verbunden werden kann, **dadurch gekennzeichnet, dass** an einem mit dem Anschlusselement (14) drehfest verbundenen Bauteil (24, 32) federnd nachgiebige Mittel (28, 29, 64, 66, 78, 80) vorgesehen sind, die mit starren Mitteln (58, 60, 62, 72, 76) am Wischarm (48, 50) verrasten können und im verrasteten Zustand die Schwenkbewegung des Wischblatts (10) relativ zum Wischarm (50) begrenzen.

2. Wischblatt (10) nach Anspruch 1, **dadurch gekennzeichnet, dass** die Federkraft der federnd nachgiebigen Mittel (28, 29, 64, 66, 78, 80) so stark ist, dass diese beim Verrasten ein deutlich wahrnehmbares Geräusch erzeugen.

3. Wischblatt (10) nach Anspruch 1 oder 2, **dadurch gekennzeichnet, dass** an dem Anschlusselement (14) ein Adapterelement (24) befestigt ist und im Bereich seiner dem Wischarm (48) zugewandten Stirnseite (26) eine Federtaste (28) aufweist, die an einer Seite, die einer Vertiefung (42) der Abdeckkappe (32) für die Brücke (54) des Wischarms (48, 50) zugewandt ist, eine Rastnase (29) aufweist.

4. Wischblatt (10) nach Anspruch 3, **dadurch gekennzeichnet, dass** die Abdeckkappe (32) in ihrer dem Wischarm (48) zugewandten Stirnwand (44) eine Öffnung (46) besitzt, durch die im montierten Zustand die Federtaste (28) betätigt werden kann.

5. Wischblatt (10) nach Anspruch 1 oder 2, **dadurch gekennzeichnet, dass** das Adapterelement (24) auf seiner dem Wischarm (48) abgewandten Längsseite im Bereich der Vertiefung (42) der Abdeckkappe (32) eine Federzunge (64) mit einem nach außen abgewinkelten Ende (66) besitzt.

6. Wischblatt (10) nach Anspruch 3, **dadurch gekennzeichnet, dass** das Adapterelement (24) oder die Abdeckkappe (32) im Schwenkbereich einer zur Antriebsseite des Wischarms (48, 50) weisenden Ecke (94) eines abgewinkelten Endes (56) der Brücke (54) eine Federzunge (98) aufweist.

7. Wischblatt (10) nach Anspruch 6, **dadurch gekennzeichnet, dass** die Federzunge (98) durch Einschnitte (102) in eine quer verlaufende Kante (100) des Adapterelements (24) bzw. der Abdeckkappe (32) gebildet ist.

8. Wischblatt (10) nach Anspruch 1 oder 2, **dadurch gekennzeichnet, dass** die Abdeckkappe (32) an ihrer einem Verbindungselement (50) des Wischarms (48) zugewandten äußeren Seite einer Seitenwand (36) im Schwenkbereich einer Ecke (76) einer Innenwand (72) des Wischarms (48, 50) eine in Längsrichtung des Wischblatts (10) nachgiebige Federzunge (78) mit einem zum äußeren Ende des Wischblatts (10) abgewinkelten Ende (80) besitzt.

9. Wischblatt (10) nach Anspruch 8, **dadurch gekennzeichnet, dass** die Abdeckkappe (32) im Abstand zur Federzunge (78) einen festen Anschlag (82) besitzt, der die Schwenkbewegung des Wischarms (48) in entgegengesetzter Drehrichtung wie die Federzunge (78) begrenzt.

10. Wischarm (48) mit einem Verbindungselement (50) zum Verwenden mit einem Wischblatt (10) nach einem der Ansprüche 3 oder 4, **dadurch kennzeichnet, dass** das Verbindungselement (50) eine parallel zu einer Gelenkachse (52) verlaufende Brücke (54) mit einem abgewinkelten Ende (56) besitzt, wobei an der Brücke (54) auf der dem Wischarm (48) zugewandten Seite eine zum Wischblatt (10) abgewinkelte Lasche (58) mit einem Langloch (60) in Schwenkrichtung angeformt ist, das mit der Rastnase (29) an der Federtaste (28) zusammenwirkt.

11. Wischarm (48) mit einem Verbindungselement (50) zum Verwenden mit einem Wischblatt (10) nach Anspruch 5, **dadurch gekennzeichnet, dass** das Verbindungselement (50) eine parallel zu einer Gelenkachse (52) verlaufende Brücke (54) mit einem abgewinkelten Ende (56) besitzt, das an seiner inneren Seite einen Nocken (62) aufweist, der mit der Federzunge (64) zusammenwirkt.

12. Wischarm (48) mit einem Verbindungselement (50) zum Verwenden mit einem Wischblatt (10) nach Anspruch 8 oder 9, **dadurch gekennzeichnet, dass** das Verbindungselement (50) an seinem Ende zwei parallel zueinander verlaufende Wände (72, 74) besitzt, in die die Gelenkachse (52) fest eingesetzt ist, wobei die Innenwand (72) eine Ecke (76) besitzt, die mit der Federzunge (78) zusammenwirkt.

13. Wischarm (48) nach Anspruch 12, **dadurch gekennzeichnet, dass** die Innenwand (72) eine Anschlagfläche (84) besitzt, die mit dem Anschlag (82) zusammenwirkt.

14. Wischarm (48) nach einem der Ansprüche 10 bis 13, **dadurch gekennzeichnet, dass** das Verbindungselement (50) ein Schnappelement (92) aufweist, das zwischen der Innenwand (72) und der Außenwand (74) angeordnet ist und ein erstes Federelement (86) und ein zweites Federelement (88) besitzt, wobei das erste Federelement (86) in seiner Ausgangsposition zum freien Ende der Gelenkachse (52) ein Stück weit vor der Innenwand (72) liegt und das zweite Federelement (88) mit einem Vorsprung (90) an der der Innenwand (72) zugewandten Seite des ersten Federelements (86) anliegt, sodass der Vorsprung (90) des zweiten Federelements (88) während der Montage des Wischblatts (10) hinter die Innenwand (72) gedrückt wird und an dieser anliegt.

## Claims

1. Wiper blade (10) of flat bar construction with a wiper strip (68) and at least one spring rail (70) as supporting element, wherein a connecting element (14) is fastened on the spring rail (70) in the central region of the wiper blade (10), to which connecting element a covering cap (32) is fixedly, but releasably connected, said connecting element and covering cap being configured in such a manner that a wiper arm (48) running laterally with respect to the connecting element (14) can be connected by a hinge pin (52) running transversely with respect to the longitudinal direction of the wiper blade (10) and by a bridge (54) parallel to said hinge pin to the wiper blade (10) so as to be pivotable about the hinge pin (52), **characterized in that** resiliently flexible means (28, 29, 64, 66, 78, 80) are provided on a component (24, 32), which is connected to the connecting element (14) for rotation therewith, said resiliently flexible means being able to be latched to rigid means (58, 60, 62, 72, 76) on the wiper arm (48, 50) and, in the latched state, limiting the pivoting movement of the wiper blade (10) relative to the wiper arm (50).

2. Wiper blade (10) according to Claim 1, **characterized in that** the spring force of the resiliently flexible means (28, 29, 64, 66, 78, 80) is of such a strength that said means produce a clearly perceptible noise upon latching.

3. Wiper blade (10) according to Claim 1 or 2, **characterized in that** an adapter element (24) is fastened to the connecting element (14) and, in the region of its end side (26) facing the wiper arm (48), has a spring button (28) which has a latching lug (29) on a side which faces a depression (42) in the covering cap (32) for the bridge (54) of the wiper arm (48, 50).

4. Wiper blade (10) according to Claim 3, **characterized in that** the covering cap (32) has, in its end wall (44) facing the wiper arm (48), an opening (46) through which, in the mounted state, the spring button (28) can be actuated.

5. Wiper blade (10) according to Claim 1 or 2, **characterized in that** that longitudinal side of the adapter element (24) which faces away from the wiper arm (48) has a spring tongue (64) with an outwardly angled end (66) in the region of the depression (42) of the covering cap (32).

6. Wiper blade (10) according to Claim 3, **characterized in that** the adapter element (24) or the covering cap (32) has a spring tongue (98) in the pivoting region of a corner (94) of an angled end (56) of the bridge (54), which corner faces the driving side of the wiper arm (48, 50).

7. Wiper blade (10) according to Claim 6, **characterized in that** the spring tongue (98) is formed by incisions (102) in a transversely running edge (100) of the adapter element (24) or of the covering cap (32).

8. Wiper blade (10) according to Claim 1 or 2, **characterized in that** the covering cap (32) has, on its outer side of a side wall (36), which side faces a joining element (50) of the wiper arm (48), in the pivoting region of a corner (76) of an inner wall (72) of the wiper arm (48, 50) a spring tongue (78) which is flexible in the longitudinal direction of the wiper blade (10), with an end (80) which is angled with respect to the outer end of the wiper blade (10).

9. Wiper blade (10) according to Claim 8, **characterized in that** the covering cap (32) has, at a distance from the spring tongue (78), a fixed stop (82) which limits the pivoting movement of the wiper arm (48) in the opposite direction of rotation from the spring tongue (78).

10. Wiper arm (48) with a joining element (50) for use with a wiper blade (10) according to either of Claims 3 and 4, **characterized in that** the joining element (50) has a bridge (54), running parallel to a hinge pin (52), with an angled end (56), wherein a tab (58) which is angled with respect to the wiper blade (10) and has an elongated hole (60) which interacts with the latching lug (29) on the spring button (28) is integrally formed in the pivoting direction on that side of the bridge (54) which faces the wiper arm (48).

11. Wiper arm (48) with a joining element (50) for use with a wiper blade (10) according to Claim 5, **characterized in that** the joining element (50) has a bridge (54), running parallel to a hinge pin (52), with an angled end (56), the inner side of which has a cam (62) which interacts with the spring tongue (64).

12. Wiper arm (48) with a joining element (50) for use with a wiper blade (10) according to Claim 8 or 9, **characterized in that** the joining element (50) has, at the end thereof, two walls (72, 74) which run parallel to each other and into which the hinge pin (52) is fixedly inserted, wherein the inner wall (72) has a corner (76) which interacts with the spring tongue (78).

13. Wiper arm (48) according to Claim 12, **characterized in that** the inner wall (72) has a stop surface (84) which interacts with the stop (82).

14. Wiper arm (48) according to one of Claims 10 to 13, **characterized in that** the joining element (50) has a snap element (92) which is arranged between the inner wall (72) and the outer wall (74) and has a first spring element (86) and a second spring element (88), wherein the first spring element (86), in the starting position thereof with respect to the free end of the hinge pin (52), lies at a distance in front of the inner wall (72), and the second spring element (88) bears with a projection (90) against that side of the first spring element (86) which faces the inner wall (72), and therefore, during the installation of the wiper blade (10), the projection (90) of the second spring element (88) is pressed behind the inner wall (72) and bears thereagainst.

## Revendications

1. Balai d'essuie-glace (10) du type à barre plate avec une baguette d'essuie-glace (68) et au moins un rail de ressort (70) comme élément porteur, dans lequel un élément de raccord (14) est fixé dans la région centrale du balai d'essuie-glace (10) sur le rail de ressort (70), auquel une coiffe de recouvrement (32) est assemblée de façon fixe, mais amovible, qui est configurée de telle manière qu'un bras d'essuie-glace (48) s'étendant latéralement à l'élément de raccord (14) puisse être assemblé à un axe d'articulation (52) s'étendant transversalement à la direction longitudinale du balai d'essuie-glace (10) et au balai d'essuie-glace (10) de façon pivotante autour de l'axe d'articulation (52) par un pont (54) parallèle à celui-ci, **caractérisé en ce qu'**il est prévu, sur un composant (24, 32) relié sans rotation à l'élément de raccord (14), des moyens élastiquement déformables (28, 29, 64, 66, 78, 80), qui peuvent s'encliqueter avec des moyens rigides (58, 60, 62, 72, 76) sur le bras d'essuie-glace (48, 50) et qui, dans l'état encliqueté, limitent le mouvement de pivotement du balai d'essuie-glace (10) par rapport au bras d'essuie-glace (50).

2. Balai d'essuie-glace (10) selon la revendication 1, **caractérisé en ce que** la force élastique des moyens élastiquement déformables (28, 29, 64, 66, 78, 80) est tellement élevée que ceux-ci produisent, lors de l'encliquetage, un bruit nettement perceptible.

3. Balai d'essuie-glace (10) selon la revendication 1 ou 2, **caractérisé en ce qu'**un élément d'adaptateur (24) est fixé sur l'élément de raccord (14) et présente, dans la région de sa face frontale (26) tournée vers le bras d'essuie-glace (48), une touche à ressort (28), qui présente un ergot d'encliquetage (29) sur un côté qui est tourné vers un creux (42) de la coiffe de recouvrement (32) pour le pont (54) du bras d'essuie-glace (48, 50).

4. Balai d'essuie-glace (10) selon la revendication 3, **caractérisé en ce que** la coiffe de recouvrement (32) comporte, dans sa paroi frontale (44) tournée vers le bras d'essuie-glace (48), une ouverture (46), à travers laquelle la touche à ressort (28) peut être actionnée dans l'état monté.

5. Balai d'essuie-glace (10) selon la revendication 1 ou 2, **caractérisé en ce que** l'élément d'adaptateur (24) comporte, dans son long côté détourné du bras d'essuie-glace (48), dans la région du creux (42) de la coiffe de recouvrement (32), une languette élastique (64) avec une extrémité (66) coudée vers l'extérieur.

6. Balai d'essuie-glace (10) selon la revendication 3, **caractérisé en ce que** l'élément d'adaptateur (24) ou la coiffe de recouvrement (32) présente une languette élastique (98) dans la région de pivotement d'un coin (94) d'une extrémité coudée (56) du pont (54), pointé en direction du côté d'entraînement du bras d'essuie-glace (48, 50).

7. Balai d'essuie-glace (10) selon la revendication 6, **caractérisé en ce que** la languette élastique (98) est formée par des entailles (102) dans un bord (100) de l'élément d'adaptateur (24) ou de la coiffe de recouvrement (32) orienté transversalement.

8. Balai d'essuie-glace (10) selon la revendication 1 ou 2, **caractérisé en ce que** la coiffe de recouvrement (32) comporte, sur son côté extérieur d'une paroi latérale (36) tourné vers un élément de liaison (50) du bras d'essuie-glace (48), dans la région d'un coin (76) d'une paroi intérieure (72) du bras d'essuie-glace (48, 50), une languette élastique (78) déformable dans la direction longitudinale du balai d'essuie-glace (10), avec une extrémité (80) coudée vers l'extrémité extérieure du balai d'essuie-glace (10).

9. Balai d'essuie-glace (10) selon la revendication 8, **caractérisé en ce que** la coiffe de recouvrement (32) comporte, à distance de la languette élastique (78), une butée fixe (82), qui limite le mouvement de pivotement du balai d'essuie-glace (48) dans le sens de rotation contraire à la languette élastique (78).

10. Bras d'essuie-glace (48) avec un élément de liaison (50) à utiliser avec un balai d'essuie-glace (10) selon l'une des revendications 3 ou 4, **caractérisé en ce que** l'élément de liaison (50) comporte un pont (54) avec une extrémité coudée (56), qui s'étend parallèlement à un axe d'articulation (52), dans lequel une patte (58) avec un trou allongé (60) dans la direction de pivotement et coudée vers le balai d'essuie-glace (10) est formée sur le pont (54) sur le côté tourné vers le bras d'essuie-glace (48), ce trou coopérant avec l'ergot d'encliquetage (29) sur la touche à ressort (28).

11. Bras d'essuie-glace (48) avec un élément de liaison (50) à utiliser avec un balai d'essuie-glace (10) selon la revendication 5, **caractérisé en ce que** l'élément de liaison (50) comporte un pont (54) qui s'étend parallèlement à un axe d'articulation (52) et avec une extrémité coudée (56), qui présente sur son côté intérieur une came (62), qui coopère avec la languette élastique (64).

12. Bras d'essuie-glace (48) avec un élément de liaison (50) à utiliser avec un balai d'essuie-glace (10) selon la revendication 8 ou 9, **caractérisé en ce que** l'élément de liaison (50) comporte à son extrémité deux parois (72, 74) s'étendant parallèlement l'une à l'autre, dans lesquelles l'axe d'articulation (52) est fermement introduit, dans lequel la paroi intérieure (72) comporte un coin (76), qui coopère avec la languette élastique (78).

13. Bras d'essuie-glace (48) selon la revendication 12, **caractérisé en ce que** la paroi intérieure (72) comporte une face de butée (84), qui coopère avec la butée (82).

14. Bras d'essuie-glace (48) selon l'une quelconque des revendications 10 à 13, **caractérisé en ce que** l'élément de liaison (50) présente un élément à déclic (92), qui est disposé entre la paroi intérieure (72) et la paroi extérieure (74) et qui comporte un premier élément à ressort (86) et un deuxième élément à ressort (88), dans lequel le premier élément à ressort (86) est situé dans sa position initiale un peu devant la paroi intérieure (72) en direction de l'extrémité libre de l'axe d'articulation (52) et le deuxième élément à ressort (88) s'applique avec une saillie (90) sur un côté du premier élément à ressort (86) tourné vers la paroi intérieure (72), de telle manière que la saillie (90) du deuxième élément à ressort (88) soit poussé, pendant le montage du balai d'essuie-glace (10), derrière la paroi intérieure (72) ou s'applique sur celle-ci.
